# EUROPÄISCHE PATENTSCHRIFT

(11) **EP 4 314 757 B1**
(45) Veröffentlichungstag und Bekanntmachung des Hinweises auf die Patenterteilung: **18.12.2024**
(21) Anmeldenummer: 22709693.0
(22) Anmeldetag: 01.03.2022
(51) Int. Cl.: G01M 13/02, B60L 3/00, F16H 61/12, G01M 17/007, B60W 50/02, B60W 50/14, B60W 50/029

(54) **VERFAHREN ZUM ERMITTELN EINES DEFEKT-ZUSTANDES EINES ANTRIEBSSTRANGS EINES FAHRZEUGES, ÜBERWACHUNGSEINHEIT UND FAHRZEUG**
METHOD FOR DETERMINING A DEFECT STATE OF A DRIVE TRAIN OF A VEHICLE, MONITORING UNIT AND VEHICLE
PROCÉDÉ DE DÉTERMINATION D'UN ÉTAT DÉFECTUEUX D'UNE CHAÎNE CINÉMATIQUE D'UN VÉHICULE, UNITÉ DE SURVEILLANCE ET VÉHICULE

(30) Priorität: 31.03.2021 DE 102021108222
(43) Veröffentlichungstag der Anmeldung: 07.02.2024
(73) Patentinhaber: ZF CV Systems Global GmbH, 3006 Bern (CH)
(72) Erfinder: HILLBRING, Dirk, 29225 Celle (DE); SCHAPER, Mark, 30519 Hannover (DE)
(74) Vertreter: Rabe, Dirk-Heinrich
(86) Internationale Anmeldenummer: PCT/EP2022/055072
(87) Internationale Veröffentlichungsnummer: WO 2022/207214

(56) Entgegenhaltungen:
- AT-A4- 508 032
- DE-A1- 102007 052 749
- DE-A1- 102011 089 101
- DE-A1- 102012 011 757
- DE-A1- 102019 100 323

## Beschreibung

Die Erfindung betrifft ein Verfahren zum Ermitteln eines Defekt-Zustandes eines Antriebsstrangs, eine Überwachungseinheit zur Durchführung des Verfahrens sowie ein Fahrzeug.

Im Antriebsstrang von Fahrzeugen kann es infolge von Defekten zu temporären Funktionsbeeinträchtigungen kommen, wenn das vom Motor bzw. Antrieb erzeugte Antriebsmoment nicht fortlaufend vollständig auf die Räder und damit auf den Untergrund übertragen werden kann. Ferner kann es aufgrund von Defekten an einzelnen Bauteilen des Antriebsstrangs zu Folgeschäden kommen. So können beispielsweise nicht korrekt befestigte Räder oder defekte Zahnkränze im Antriebsstrang oder defekte Reifen zu einem dauerhaften Ausfall des Antriebsstrangs sowie auch zu gefährlichen Unfällen durch sich lösende Bauteile führen.

Werden beispielsweise Radmuttern, die das Rad an einer Radnabe des Fahrzeuges befestigen, unbeabsichtigt teilweise oder vollständig gelöst, so können diese sowie auch die dann nicht mehr vollständig befestigten Räder eine Gefahr für den umliegenden Verkehr und für benachbarte Personen darstellen. Eine nicht vollständig angezogene Radmutter führt zudem dazu, dass sich Gewindebolzen, auf denen die Räder sitzen und auf denen die Radmuttern aufgeschraubt sind, in Löchern in den Felgen des Rades mit einem Spiel bewegen. Dadurch werden sowohl die Gewindebolzen als auch die Löcher in den Felgen stark abgenutzt, so dass ein zuverlässiges Befestigen des Rades an der Radnabe verhindert wird.

Die Überwachung des Antriebsstrangs auf derartige Defekte kann beispielsweise visuell durch den Fahrer vor oder nach der Fahrt erfolgen. Eine manuelle Überwachung während der Fahrt ist jedoch in der Regel nicht möglich. Bei automatisiert gesteuerten Fahrzeugen ist zudem kein Fahrer vorhanden, so dass auf eine zuverlässige automatische Erkennung zurückzugreifen ist, um einen sicheren und zuverlässigen autonomen Fahrbetrieb gewährleisten zu können. Eine solches ist bisher nicht bekannt.

Die DE102011089101A1 offenbart ein Verfahren zum Erkennen eines Fehlers bei einem Antriebsstrang eines Fahrzeugs, durch Erkennen eines Fehlers beim Antriebsstrang basierend auf dem Ergebnis des Vergleichens des zeitlichen Verlaufs des Ist-Drehwinkels mit dem vorgegebenen Referenzverlauf.

Die DE102012011757A1 betrifft ein Verfahren zum Erfassen eines Verdrehspiels eines Antriebsstrangs eines Fahrzeugs, bei dem vor einem Übergang von einem Schub- in einen Zugbetrieb des Fahrzeugs zeitlich hoch aufgelöst aus einer erfassten Motordrehzahl und einer erfassten Referenzdrehzahl eine Drehzahldifferenz zwischen Motordrehzahl und Referenzdrehzahl ermittelt wird.

Die DE102007052749A1 betrifft ein Verfahren zum Detektieren von Radschlupf an wenigstens einem Rad, das von einem Motor angetrieben wird, wobei das am Rad wirkende Antriebsmoment variiert, und die Reaktion des Rades auf die Änderung des Antriebsmoments gemessen und ausgewertet wird.

Die DE102019100323A1 betrifft eine Systemanordnung sowie ein Verfahren zur Diagnose eines Verdrehspiels im Antriebsstrang eines Kraftfahrzeugs, wobei es möglich ist, zeitliche Verzögerungen, welche aufgrund von notwendigen Toleranzen innerhalb eines Antriebssystems eines Kraftfahrzeugs entstehen, vorteilhaft zu analysieren und gegebenenfalls entgegenzuwirken.

Die AT508032A4 offenbart ein Verfahren sowie einen Prüfstand zum Prüfen eines Antriebsstrangs eines Fahrzeugs mit zumindest einer Welle, wobei zur Erzielung eines Soll-Verspannmoments im Antriebsstrang die Drehwinkel der Welle bzw. Wellen an zumindest zwei gesonderten Stellen im Antriebsstrang geregelt werden bzw. eine Drehwinkeldifferenz zwischen zumindest zwei Stellen im Antriebsstrang geregelt wird Aufgabe der Erfindung ist daher, ein Verfahren zum Ermitteln eines Defekt-Zustandes eines Antriebsstrangs eines Fahrzeuges anzugeben, mit dem ein sicherer und zuverlässiger Fahrbetrieb gewährleistet werden kann. Aufgabe der Erfindung ist weiterhin, eine Überwachungseinheit und ein Fahrzeug anzugeben.

Diese Aufgabe wird durch ein Verfahren, eine Überwachungseinheit und ein Fahrzeug gemäß den unabhängigen Ansprüchen gelöst. Die Unteransprüche geben bevorzugte Weiterbildungen an.

Erfindungsgemäß ist demnach ein Verfahren zum Ermitteln eines Defekt-Zustandes eines Antriebsstrangs eines Fahrzeuges vorgesehen, wobei das Fahrzeug eine Antriebs-Achse mit einem Antriebs-Rad und eine Referenz-Achse mit einem Referenz-Rad aufweist,
wobei über den Antriebsstrang ein von einem Antrieb erzeugtes Antriebsmoment über das Antriebs-Rad auf einen Untergrund übertragen werden kann und das Antriebsmoment des Antriebs nicht über das Referenz-Rad der Referenz-Achse auf den Untergrund übertragen wird, mit mindestens den folgenden Schritten:
- Einlesen einer Antriebs-Größe, wobei die Antriebs-Größe abhängig von einer Motordrehzahl des Antriebs ist und daher das Drehverhalten bzw. das Antriebsverhalten der Antriebs-Achse charakterisiert, wobei die Antriebs-Größe vorzugsweise unmittelbar durch die Motordrehzahl des Antriebs ge-geben ist, z.B. durch einen Resolver (Winkelgeber) in einer E-Maschine;
- Einlesen einer Referenz-Größe, wobei die Referenz-Größe abhängig von einer Referenz-Raddrehzahl des Referenz-Rades ist und daher das Drehverhalten der Referenz-Achse charakterisiert;
- Ermitteln, ob zwischen der eingelesenen Antriebs-Größe und der eingelesenen Referenz-Größe eine Abweichung vorliegt zum Feststellen, ob die Referenz-Raddrehzahl des Referenz-Rades mit der Motordrehzahl des Antriebs zusammenhängt, wobei bei Vorliegen einer Abweichung auf einen Defekt-Zustand des Antriebsstranges geschlossen wird; und
- Ausgeben eines Zustands-Signals bei Vorliegen eines Defekt-Zustandes des Antriebsstranges, was gleichwirkend ist mit dem Wegfall eines dauerhaft ausgegebenen Zustands-Signals bei Vorliegen eines Defekt-Zustandes.

Daher kann in einfacher und zuverlässiger Weise durch einen Vergleich des Drehverhaltens bzw. des Antriebsverhaltens der Antriebs-Achse mit dem Drehverhalten der nicht-angetriebenen Referenz-Achse geprüft werden, ob ein erzeugtes Antriebsmoment über den Antriebsstrang auf den Untergrund übertragen wird. Ist dies aufgrund eines Defekts nicht der Fall, so ist zu erwarten, dass sich ein Unterschied in dem Drehverhalten der beiden Achsen ergibt, wobei das Drehverhalten der jeweiligen Achse durch die Antriebs-Größe bzw. die Referenz-Größe angegeben werden kann. So kann vorzugsweise mit bereits vorhandener Sensorik im Fahrzeug einfach auf einen Defekt geschlossen werden. Dies kann in einer erfindungsgemäßen Überwachungseinheit erfolgen, die dazu ausgebildet ist, das erfindungsgemäße Verfahren auszuführen.

Vorzugsweise ist dabei vorgesehen, dass bei Vorliegen einer Abweichung zwischen der eingelesenen Antriebs-Größe und der eingelesenen Referenz-Größe auf einen Defekt-Zustand des Antriebsstranges unter Berücksichtigung eines Normal-Zustandes des Antriebsstrangs geschlossen wird. Bei der Auswertung der Abweichung wird also vorteilhafterweise ergänzend berücksichtigt, ob sich eine bestimmte Abweichung aufgrund eines üblichen, zu erwartenden Verhaltens des Antriebsstranges ergibt bzw. dieses übliche Verhalten zu einem bestimmten Teil zu einer Abweichung zumindest beiträgt. So kann beispielsweise im Neuzustand schon ein gewisses Spiel in den Komponenten des Antriebsstrangs vorhanden sein, wobei dieses normalerweise auftretende Spiel bei einem Anlagenwechsel dann nicht auf einen Defekt-Zustand zurückzuführen ist. Erst wenn sich das Spiel beispielsweise durch Verschleiß oder ein Lösen der Komponenten des Antriebsstranges vergrößert (ausgehend vom Neuzustand) kann dies durch die erfindungsgemäße Auswertung als Defekt-Zustand angezeigt werden.

In dem Fall ist also vorzugsweise vorgesehen, dass nicht auf einen Defekt-Zustand geschlossen wird, wenn eine Abweichung zwischen der eingelesenen Antriebs-Größe und der eingelesenen Referenz-Größe lediglich bzw. ausschließlich aufgrund eines Normal-Zustandes des Antriebsstrangs, d.h. aufgrund eines zu erwartenden Verhaltens des Antriebsstranges, verursacht wird, wobei der Antriebsstrang in dem Normal-Zustand trotz einer festgestellten Abweichung zwischen der eingelesenen Antriebs-Größe und der eingelesenen Referenz-Größe keinen Defekt aufweist. Auf diese Weise kann eine bestimmte zu erwartende Abweichung bei der Ermittlung des Defekt-Zustand berücksichtigt werden. Tritt in der oszillierenden Antriebs-Größe temporär bzw. nicht-periodisch beispielsweise ausschließlich ein eingelernter erster Versatz auf, der einem üblichen Verhalten des Antriebsstranges zugeordnet ist, so kann dieser unberücksichtigt bleiben bzw. ein Defekt-Zustand auch weiterhin ausgeschlossen werden, wenn nicht auch andere Ursachen zu einer zusätzlichen Abweichung beitragen.

Vorzugsweise ist weiterhin vorgesehen, dass die in einem Normal-Zustand feststellbare Abweichung zwischen der eingelesenen Antriebs-Größe und der eingelesenen Referenz-Größe vorab eingelernt wird. So kann in vorherigen Versuchen beispielsweise festgestellt werden, dass eine Abweichung zwischen der eingelesenen Antriebs-Größe und der eingelesenen Referenz-Größe in dem Normal-Zustand aus einem toleranzbedingten bzw. üblichen und demnach zu erwartenden Zahnspiel in einem Getriebe des Antriebsstranges resultiert. Auf diese Weise kann die Ermittlung des Defekt-Zustandes genauer und schneller durchgeführt werden, wenn derartige übliche Effekte vorher eingelernt werden.

Vorzugsweise ist weiterhin vorgesehen, dass aus einer Abweichung zwischen der eingelesenen Antriebs-Größe und der eingelesenen Referenz-Größe lediglich bzw. ausschließlich dann auf einen Defekt-Zustand geschlossen wird, wenn sich diese Abweichung bei bzw. infolge
- einer Veränderung des über das Antriebs-Rad auf den Untergrund übermittelten Antriebsmomentes und/oder
- einer Veränderung eines über das Antriebs-Rad auf den Untergrund übermittelten Bremsmomentes
   ergibt.

Vorteilhafterweise wird also angenommen, dass Defekte vor allem bei einer Veränderung des wirkenden Antriebsmomentes bzw. allgemein von wirkenden Drehmomenten im Antriebsstrang erkannt werden können. Wenn sich also eine induzierte Kraft bzw. ein induziertes Drehmoment auf die einzelnen Antriebs-Bauteile verändert, ist anzunehmen, dass dieses veränderte Drehmoment im Defekt-Fall verzögert oder gestört, z.B. verursacht durch einen Anlagenwechsel bei Vorliegen eines verschleißbedingten Spiels oder einer gelösten Komponente im Antriebsstrang, über den Antriebsstrang übertragen wird. Diese Verzögerung bzw. Störung kann durch den Vergleich mit dem Drehverhalten des Referenz-Rades, der diese Störung bei Veränderung des Antriebsmoments bzw. Bremsmomentes nicht erfährt, in Form einer zumindest temporär auftretenden Abweichung ermittelt werden.

Vorzugsweise ist dazu weiterhin vorgesehen, dass aus einer Abweichung zwischen der eingelesenen Antriebs-Größe und der eingelesenen Referenz-Größe lediglich bzw. ausschließlich dann auf einen Defekt-Zustand geschlossen wird, wenn sich diese Abweichung
- bei einer Veränderung des Antriebsmomentes des Antriebs mit einem Vorzeichenwechsel, oder
- bei einer Veränderung des Antriebsmomentes des Antriebs und/oder des Bremsmomentes auf Null oder
- bei einer Veränderung des Antriebsmomentes des Antriebs und/oder des Bremsmomentes ausgehend von Null
   ergibt. Unter einer Veränderung ist dabei zu verstehen, dass vorher ein anderes Antriebsmoment bzw. Bremsmoment an der Antriebs-Achse vorgelegen hat. Es liegt also für das Antriebsmoment ein Nulldurchgang mit positiver oder negativer Steigung oder für das Antriebsmoment und/oder das Bremsmoment ein Abfallen oder Ansteigen auf Null vor.

Vorzugsweise ist weiterhin vorgesehen, dass die Antriebs-Größe und die Referenz-Größe jeweils einen oszillierenden Verlauf aufweisen, wobei die Antriebs-Größe und die Referenz-Größe durch einen inkrementell messenden Drehzahlsensor aufgenommen werden. Dadurch lässt sich in hochauflösender Weise eine Veränderung bzw. eine Abweichung in den jeweiligen Größen erfassen, wenn ein Defekt-Zustand lediglich temporär und kurzzeitig auftritt. In einem oszillierenden Verhalten lässt sich dieser Defekt-Zustand gut darstellen.

Vorzugsweise ist dazu vorgesehen, dass auf einen Defekt-Zustand des Antriebsstrangs geschlossen wird, wenn die Abweichung durch einen zweiten Versatz in der Antriebs-Größe verursacht wird, wobei der zweite Versatz durch eine veränderte Periodenlänge des oszillierenden Verlaufes der Antriebs-Größe verursacht wird, wobei der zweite Versatz in dem oszillierenden Verlauf der Referenz-Größe nicht nachgewiesen werden kann. Durch eine Analyse der Periodenlänge oder gleichwirkend damit der Frequenz lässt sich also in einfacher Weise eine Abweichung ermitteln.

Vorzugsweise ist weiterhin vorgesehen, dass sich die Periodenlänge des oszillierenden Verlaufes der Antriebs-Größe kurzzeitig und nicht periodisch verändert, wenn ein Defekt-Zustand des Antriebsstranges vorliegt. Damit kann in einfacher Weise identifiziert werden, ob eine Abweichung aufgrund eines einmaligen Effektes auftritt, der ggf. an das Drehmoment im Antriebsstrangs gekoppelt ist, oder aufgrund eines immer wiederkehrenden systematischen Effektes, der aber zu erwarten ist.

Vorzugsweise ist weiterhin vorgesehen, dass ein Defekt-Zustand vorliegt, wenn eine das Antriebs-Rad an einer Antriebs-Radnabe befestigende Radmutter derartig lose ist, dass sich eine Abweichung zwischen der eingelesenen Antriebs-Größe und der eingelesenen Referenz-Größe bei einer Veränderung des über das Antriebs-Rad auf den Untergrund übermittelten Antriebsmomentes und/oder einer Veränderung eines über das Antriebs-Rad auf den Untergrund übermittelten Bremsmomentes ergibt, da die Referenz-Raddrehzahl des Referenz-Rades zumindest zeitweise nicht mehr mit der Motordrehzahl des Antriebs zusammenhängt. Dies kann dadurch verursacht werden, dass sich bei einer gelösten Radmutter der Gewindebolzen in einem Loch der Felge je nach Vorzeichen des Drehmomentes im Antriebsstrang bewegen kann und je nach erzeugtem Drehmoment zwischen zwei Anschlägen wechselt, wodurch das Antriebsmoment/Bremsmoment nicht durchgängig auf den Untergrund übertragen wird. Dies lässt sich in einfacher Weise durch eine Abweichung temporär insbesondere dann ermitteln, wenn das erzeugte Drehmoment (Antriebsmoment/Bremsmoment) das Vorzeichen wechselt bzw. auf Null ansteigt bzw. abfällt.

Vorzugsweise ist weiterhin vorgesehen, dass - als Antriebs-Größe die Motordrehzahl des Antriebs und/oder eine Antriebs-Nabendrehzahl einer Antriebs-Radnabe in demselben Antriebsstrang wie der Antrieb eingelesen wird, wobei das Antriebs-Rad an der Antriebs-Radnabe angeordnet ist und die Antriebs-Nabendrehzahl zumindest während einer Übertragung eines Antriebsmomentes der Motordrehzahl des Antriebs entspricht, und/oder - als Referenz-Größe eine Referenz-Nabendrehzahl einer Referenz-Radnabe an der Referenz-Achse eingelesen wird, wobei das Referenz-Rad an der Referenz-Radnabe angeordnet ist.

Auf diese Weise kann für die Überwachung auf eine Sensorik zurückgegriffen werden, die im Fahrzeug ohnehin vorhanden ist, wobei die Referenz-Größe beispielsweise mit einem Rad-Drehzahlsensor an der Referenz-Achse, der als Bestandteil eines ABS-Systems ohnehin vorhanden ist, ermittelt werden kann. Die Antriebs-Größe kann über einen Motor-Drehzahlsensor, der direkt die Motordrehzahl misst, oder ebenfalls über einen Rad-Drehzahlsensor an der Antriebs-Achse, der ebenfalls Bestandteil eines ABS-Systems ist, ermittelt werden.

Ein erfindungsgemäßes Fahrzeug, insbesondere Nutzfahrzeug, kann mit einer erfindungsgemäßen Überwachungseinheit ausgestattet sein, wobei das Fahrzeug eine Antriebs-Achse mit einem Antriebs-Rad und eine Referenz-Achse mit einem Referenz-Rad aufweist, wobei über einen Antriebsstrang des Fahrzeuges ein von einem Antrieb erzeugtes Antriebsmoment über das Antriebs-Rad auf einen Untergrund übertragen werden kann und das Antriebsmoment des Antriebs nicht über das Referenz-Rad der Referenz-Achse auf den Untergrund übertragen wird, wobei der Antriebs-Achse ein Antriebs-Drehzahlsensor zugeordnet ist zum Ermitteln der Antriebs-Größe und der Referenz-Achse ein Referenz-Drehzahlsensor zum Ermitteln der Referenz-Größe.

Vorzugsweise ist dabei vorgesehen, dass der Antrieb ein Elektromotor zum Erzeugen des Antriebsmomentes ist und der Antriebs-Drehzahlsensor ein Motor-Drehzahlsensor, der als Antriebs-Größe direkt eine Motordrehzahl erfasst.

Die Erfindung wird im Folgenden anhand eines Ausführungsbeispiels näher erläutert. Es zeigen:
- Fig. 1: eine schematische Ansicht eines Fahrzeuges;
- Fig. 2: eine Antriebsverhalten der Räder des Fahrzeuges gemäß Fig. 1;
- Fig. 3, 4, 5: oszillierendes Verhalten der Signale von Drehzahlsensoren;
- Fig. 5A: ein Anlagenwechsel infolge einer losen Radmutter als beispielhafter Defekt-Zustand des Antriebsstranges; und
- Fig. 6: ein Flussdiagramm eines erfindungsgemäßen Verfahrens.

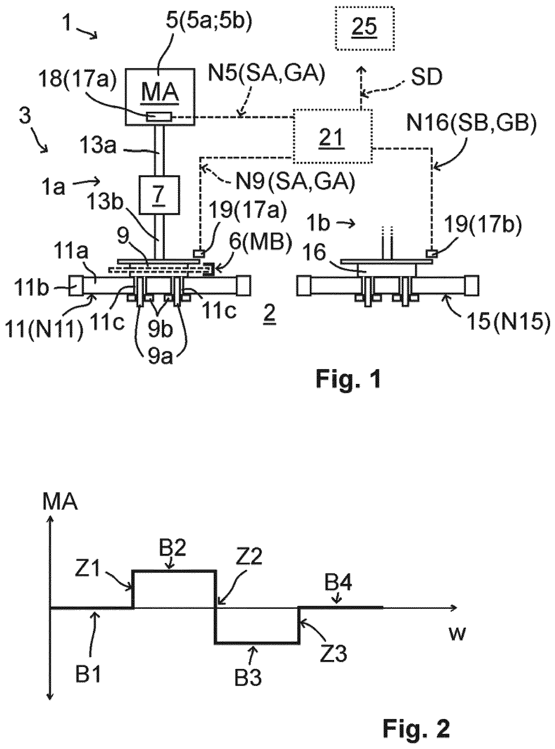

Figur 1 zeigt stark schematisiert ein Fahrzeug 1, das sich auf einem Untergrund 2 befindet und das zumindest zwei Achsen 1a, 1b aufweist. Das Fahrzeug 1 kann ein Zugfahrzeug (Motorwagen, Zugmaschine, etc.) oder ein Anhänger (Deichselanhänger, Sattelauflieger, etc.) sein. Eine Antriebs-Achse 1a des Fahrzeuges 1 ist dabei Bestandteil eines Antriebsstrangs 3 des Fahrzeuges 1. Zu dem Antriebsstrang 3 werden dabei alle Antriebs-Bauteile gezählt, die im Fahrzeug 1 die Antriebs-Leistung generieren und bis auf den Untergrund 2 übertragen. Zum Antriebsstrang 3 gehören also insbesondere ein Antrieb 5, z.B. ein Elektromotor 5a oder ein Verbrennungsmotor 5b, ein Getriebe 7, eine Antriebs-Radnabe 9, ein Antriebs-Rad 11 mit einer Felge 11 a und darauf aufgezogenem Reifen 11b sowie entsprechende Übertragungselemente zwischen den genannten Antriebs-Bauteilen. Der Antriebsstrang 3 kann auch weitere nicht dargestellte Antriebs-Bauteile aufweisen.

Der Antrieb 5 ist dabei über eine erste Antriebswelle 13a mit dem Getriebe 7 und das Getriebe 7 über eine zweite Antriebswelle 13b mit der Antriebs-Radnabe 9 verbunden. An der Antriebs-Radnabe 9 ist das Antriebs-Rad 11 befestigt, wobei die Antriebs-Radnabe 9 dazu mehrere Gewindebolzen 9a aufweist, die jeweils durch Löcher 11c in der Felge 11a des Antriebs-Rades 11 geführt sind. Auf den durch die Löcher 11c gesteckten Gewindebolzen 9a sind Radmuttern 9b aufgeschraubt, die die Felge 11a gegen die Antriebs-Radnabe 9 drücken und das Antriebs-Rad 11 dadurch im angezogenen Zustand sicher an der Antriebs-Radnabe 9 befestigen. Bei ausreichender Befestigung wird das vom Antrieb 5 erzeugte Antriebsmoment MA (Drehmoment) über das Getriebe 7 auf die Antriebs-Radnabe 9 und über den Reifen 11b unmittelbar auf den Untergrund 2 übertragen.

Neben der Antriebs-Achse 1a weist das Fahrzeug eine Referenz-Achse 1b auf, die im gezeigten Ausführungsbeispiel nicht angetrieben ist. An der Referenz-Achse 1b ist ein Referenz-Rad 15 vorgesehen, das beispielsweise ebenso wie das Antriebs-Rad 11 über Gewindebolzen 9a und Radmuttern 9b an einer Referenz-Radnabe 16 befestigt ist. Es können aber auch andere Befestigungen vorgesehen sein. Das in dem Fall nicht angetriebene Referenz-Rad 15 an der Referenz-Achse 1b dreht sich infolge einer über das Antriebs-Rad 11 an der Antriebs-Achse 1a induzierten Bewegung des Fahrzeuges 1 durch Abrollen auf dem Untergrund 2 automatisch mit. Das Antriebsmoment MA wird also nicht direkt vom Antrieb 5 auf das Referenz-Rad 15 der Referenz-Achse 1b übertragen.

Der Antriebs-Achse 1a sind gemäß dem gezeigten Ausführungsbeispiel weiterhin zwei Antriebs-Drehzahlsensoren 17a in Form eines Motor-Drehzahlsensors 18 und eines Rad-Drehzahlsensor 19 zugeordnet, mit denen sich das Drehverhalten der Antriebs-Achse 1b bestimmen lässt. Der Motor-Drehzahlsensor 18 ist ausgebildet, eine mit der Motordrehzahl N5 des Antriebs 5 zusammenhängende Größe hochauflösend unmittelbar am Antrieb 5 zu erfassen. Ein derartiger Motor-Drehzahlsensor 18 ist beispielsweise integraler Bestandteil eines das Fahrzeug 1 antreibenden Elektromotors 5a.

Der Rad-Drehzahlsensor 19 misst beispielsweise eine mit einer Antriebs-Nabendrehzahl N9 der Antriebs-Radnabe 9 zusammenhängende Grö-ße. Da die Antriebs-Radnabe 9 über die Antriebswellen 13a, 13b und das Getriebe 7 mit dem Antrieb 5 verbunden ist, entspricht die Antriebs-Nabendrehzahl N9 im eingekuppelten Zustand idealerweise der Motordrehzahl N5, falls keine Defekte im Antriebsstrang 3 zwischen dem Antrieb 5 und der Antriebs-Radnabe 9 vorliegen.

Der Referenz-Achse 1b ist im gezeigten Ausführungsbeispiel ein Referenz-Drehzahlsensor 17b, vorliegend ebenfalls ein Rad-Drehzahlsensor 19, zugeordnet. Dieser misst eine mit der Referenz-Nabendrehzahl N16 der Referenz-Radnabe 16 zusammenhängende Größe und damit das Drehverhalten der Referenz-Achse 1b. Die Rad-Drehzahlsensoren 19 an den jeweiligen Achsen 1a, 1b sind dabei beispielsweise Bestandteil eines ABS-Regelsystems im Fahrzeug 1. Wird davon ausgegangen, dass das jeweilige Rad 11, 15 korrekt an der jeweiligen Radnabe 9, 16 befestigt ist, entspricht die jeweilige Nabendrehzahl N9, N16 gleichzeitig auch einer Raddrehzahl N11, N15 des jeweiligen Rades 11, 15, wenn ein synchroner Radlauf angenommen wird.

Die Drehzahlsensoren 18, 19 können beispielsweise als inkrementell messende Sensoren (Inkrementalgeber) ausgeführt sein, beispielsweise mit einer optischen oder einer magnetischen Abtastung. Die jeweiligen Drehzahlsensoren 17a, 17b geben folglich Signale, d.h. ein Antriebs-Signal SA, das das Drehverhalten der Antriebs-Achse 1a (Motordrehzahl N5 oder Antriebs-Nabendrehzahl N9) charakterisiert, bzw. ein Referenz-Signal SB, das das Drehverhalten der Referenz-Achse 1b (Referenz-Nabendrehzahl N16) charakterisiert, aus, die zur weiteren Verarbeitung an eine Überwachungseinheit 21 übermittelt werden.

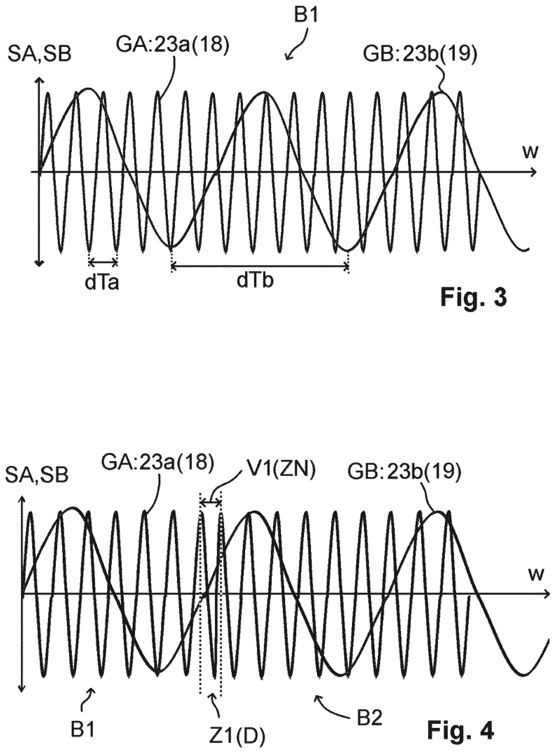

Beispielhaft ist das Antriebs-Signal SA, das von einem Motor-Drehzahlsensor 18 als Antriebs-Drehzahlsensor 17a im Antriebsstrang 3 erfasst wird, und das Referenz-Signal SB, das von einem Rad-Drehzahlsensor 19 als Referenz-Drehzahlsensor 17b an der Referenz-Achse 1b erfasst wird, in Fig. 3 dargestellt. Beide Signale SA, SB sind in derselben Fahrsituation bzw. gleichzeitig aufgenommen, d.h. sie geben das Drehverhalten der jeweiligen Achse 1a, 1b in derselben Fahrsituation wieder.

Bei einem inkrementell messenden Sensor übertragen das Antriebs-Signal SA und das Referenz-Signal SB jeweils einen oszillierenden Verlauf 23a (SA), 23b (SB), der aus der inkrementellen Abtastung folgt und aus dem sich das Drehverhalten der jeweiligen Achse 1a, 1b herleiten lässt. Der oszillierende sinushafte Signalverlauf ist dabei lediglich beispielhaft, wobei alternativ auch ein Rechtecksignal zur Auswertung genutzt werden könnte. Das Antriebs-Signal SA und das Referenz-Signal SB sind in Fig. 3 über den Fahrtweg w (x-Achse) aufgetragen, so dass sich jeweils ein geschwindigkeitsunabhängiger oszillierender Verlauf 23a, 23b mit gleichbleibender Periodenlänge dTa, dTb ergibt. Der Fig. 3 ist demnach zu entnehmen, dass sowohl die Antriebs-Achse 1a als auch die Referenz-Achse 1b über den gezeigten Fahrtweg w synchron laufen, wobei daraus darauf geschlossen werden kann, dass ein vom Antrieb 5 erzeugtes Antriebsmoment MA ungestört über den Antriebsstrang 3, insbesondere über das Antriebs-Rad 11, auf den Untergrund 2 übertragen wird und das Referenz-Rad 15 dieser Antriebsbewegung unmittelbar folgt.

Die Periodenlänge dTa, dTb des jeweiligen oszillierenden Verlaufes 23a, 23b ist dabei abhängig von einer Auflösung des jeweiligen Drehzahlsensors 17a (18), 17b (19). Der Fig. 3 ist aufgrund der kürzeren Periodendauern dTa, d.h. kürzere Inkremente, für den oszillierenden Antriebs-Verlauf 23a zu entnehmen, dass der verwendete Motor-Drehzahlsensor 18 an der Antriebs-Achse 1a eine höhere Auflösung aufweist, als der Rad-Drehzahlsensor 19 (oszillierender Referenz-Verlauf 23b) an der Referenz-Achse 1b, der beispielsweise mit einem Polrad in einem üblichen ABS-Regelsystem zum Einsatz kommt. Grundsätzlich kann auch ein Rad-Drehzahlsensor 19 mit höherer Auflösung verwendet werden, d.h. die Periodenlängen dTa, dTb der beiden Verläufe 23a, 23b nähern sich aneinander an.

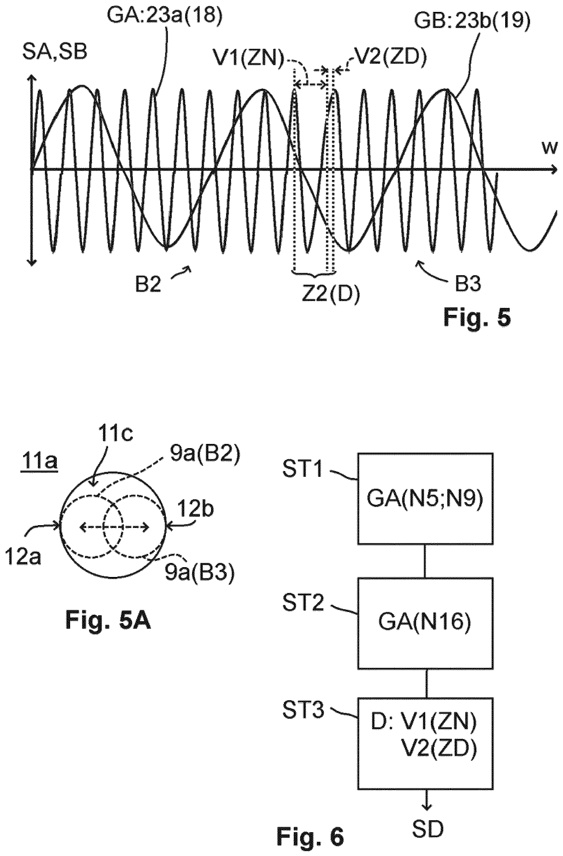

Mit einem derartigen Aufbau lässt sich wie im Folgenden beschrieben aufzeigen, ob sich zwischen dem Drehverhalten der Antriebs-Achse 1a, das durch den oszillierenden Antriebs-Verlauf 23a charakterisiert ist, und dem Drehverhalten der Referenz-Achse 1b, das durch den oszillierenden Referenz-Verlauf 23b charakterisiert ist, Abweichungen ergeben. Daraus kann darauf geschlossen werden, ob das vom Antrieb 5 erzeugte Antriebsmoment MA dauerhaft und vollständig auf den Untergrund 2 (und darüber mittelbar auf die Referenz-Achse 1b) übertragen wird oder ob Unterbrechungen in der Drehmoment-Übertragung auf einen Defekt im Antriebsstrang 3 hinweisen. Dazu kann das erfindungsgemäße Verfahren gemäß Fig. 6 beispielsweise wie folgt durchgeführt werden:
Zunächst wird in einem ersten Schritt ST1 eine das Drehverhalten der Antriebs-Achse 1a charakterisierende Antriebs-Größe GA, z.B. die Motordrehzahl N5 und/oder die Antriebs-Nabendrehzahl N9, die über zumindest einen der Antriebs-Drehzahlsensoren 17a im Antriebsstrang 3 ermittelt wird, von der Überwachungseinheit 21 eingelesen. Die Antriebs-Größe GA ist dabei dadurch charakterisiert, dass sie möglichst genau das Drehverhalten der Antriebs-Achse 1a infolge einer manuellen oder automatisierten Ansteuerung des Antriebs 5 wiedergeben kann, d.h. möglichst genau mit der Motordrehzahl N5 des Antriebs 5 übereinstimmt bzw. davon abhängt. Je näher der Messpunkt der Antriebs-Größe GA dabei am Antrieb 5 liegt, desto genauer erfüllt die Antriebs-Größe GA diese Anforderung.

Gleichzeitig wird auch die Ermittlung des Zustandes des Antriebsstrangs 3 über das erfindungsgemäße Verfahren genauer, je näher die Antriebs-Größe GA am Antrieb 5 gemessen wird. Liegt beispielsweise ein Defekt im Getriebe 7 vor, so kann durch eine Messung der Antriebs-Größe GA (vom Antrieb 5 aus gesehen) hinter dem Getriebe 7 kein Defekt im Getriebe 7 selbst festgestellt werden, da mit dem erfindungsgemäßen Verfahren lediglich das Drehverhalten (vom Antrieb 5 aus gesehen) hinter dem Messpunkt der Antriebs-Größe GA überwacht werden kann.

In einem zweiten Schritt ST2 wird eine das Drehverhalten der Referenz-Achse 1b charakterisierende Referenz-Größe GB, z.B. die Referenz-Nabendrehzahl N16, die über den Referenz-Drehzahlsensor 17b an der zugeordneten Referenz-Achse 1b gemessen wird, von der Überwachungseinheit 21 eingelesen.

Die beiden Schritte ST1, ST2 werden fortlaufend durchgeführt, wobei sich unterschiedliche Fahrsituationen ergeben können, die in Fig. 2 dargestellt sind. In Fig. 2 sind dabei das vom Antrieb 5 erzeugte Antriebsmoment MA über den Fahrtweg w aufgetragen. In einem ersten Bereich B1 befindet sich der Antrieb 5 im Leerlauf, d.h. vom Antrieb 5 wird kein Antriebsmoment MA über den Antriebsstrang 3 auf die Antriebs-Räder 11 übertragen, das Fahrzeug 1 befindet sich also in einem sog. Coasting-Modus. Daraus ergibt sich das in Fig. 3 dargestellte Drehverhalten der Antriebs-Achse 1a und der Referenz-Achse 1b wie bereits beschrieben, wobei sich im Idealfall bei zwischenachsig synchronisiertem Raddrehverhalten die Motordrehzahl N5 (Antriebs-Größe GA) über den gesamten Fahrtweg w im ersten Bereich B1 der Referenz-Nabendrehzahl N16 (Referenz-Größe GB) entspricht.

In einem zweiten Bereich B2 (s. Fig. 2) wird das Fahrzeug 1 durch eine entsprechende Ansteuerung des Antriebs 5 beschleunigt, d.h. über die Antriebs-Räder 11 wird ein entsprechendes vom Anrieb 5 erzeugtes Antriebsmoment MA auf den Untergrund 2 und darüber auf die Referenz-Räder 15 übertragen. Auch wenn im zweiten Bereich B2 eine zeitliche Änderung der Motordrehzahl N5 sowie der Referenz-Nabendrehzahl N16 zu erwarten ist, ist diese bei einer Auftragung der Motordrehzahl N5 (Antriebs-Größe GA, Antriebs-Signal SA) sowie der Referenz-Nabendrehzahl N16 (Referenz-Größe GB, Referenz-Signal SB) über den Fahrtweg w, wie in Fig. 4 dargestellt, nicht sichtbar. Die Periodenlängen dTa, dTb bleiben also entsprechend der Auflösung des jeweiligen Drehzahlsensors 17a, 17b im zweiten Bereich B2 identisch zum ersten Bereich B1.

Ein Unterschied ergibt sich jedoch in einem ersten Zwischenbereich Z1 zwischen dem ersten Bereich B1 und dem zweiten Bereich B2 (s. Fig. 2 und Fig. 4), in dem die Änderung der Fahrsituation (Coasting => Beschleunigung) eingeleitet wird. Dabei ergibt sich im ersten Zwischenbereich Z1 kurzzeitig und einmalig ein erster Versatz V1 in der Periodendauer dTa bzw. in der Frequenz des oszillierenden Antriebs-Verlaufes 23a, der durch den Motor-Drehzahlsensor 18 an der Antriebs-Achse 1a erfasst wird. Dieser erste Versatz V1 ist im oszillierenden Referenz-Verlauf 23b des Rad-Drehzahlsensors 19 an der Referenz-Achse 1b nicht zu sehen, so dass vorliegend eine Abweichung D zwischen der eingelesenen Antriebs-Größe GA und der eingelesenen Referenz-Größe GB feststellbar ist. Daraus kann darauf geschlossen werden, dass der erste Versatz V1 aus dem Drehverhalten der Antriebs-Achse 1a folgt.

Der gezeigte erste Versatz V1 resultiert beispielsweise daraus, dass zwischen den Zahnkränzen des Getriebes 7 normalerweise ein geringes Spiel vorliegt, so dass sich die Zahnkränze bei dem Übergang vom Leerlauf/Coasting (B1) zur Beschleunigungsphase (B2) kurzzeitig gegeneinander verdrehen und dadurch kurzzeitig kein Antriebsmoment MA vom Antrieb 5 über den Antriebsstrang 3 auf den Untergrund 2 übertragen wird. Dadurch ergibt sich bei einer Auftragung dieses Antriebs-Signals SA in Form der Motordrehzahl N5 als Getriebe-Größe GA über den Fahrtweg w kurzzeitig ein Sprung. Das Referenz-Signal SB bzw. die Referenz-Nabendrehzahl N16 als Referenz-Größe GB bekommt von diesem Sprung nichts mit, da dieser über das Antriebs-Rad 11 nicht auf den Untergrund 2 und damit auch nicht auf die Referenz-Achse 1b übertragen wird.

Dieser aus einem üblicherweise vorhandenen toleranzbedingten Zahnspiel ZN1 im Getriebe 7 resultierende erste Versatz V1 kann von der Überwachungseinheit 21 eingelernt werden und daher bei den jeweiligen Auswertungen von der Überwachungseinheit 21 als Normal-Zustand ZN des Antriebsstrangs 3 berücksichtigt werden. Daher kann die Überwachungseinheit 21 bei der Feststellung des ersten Versatzes V1 als Abweichung D zwischen der eingelesenen Antriebs-Größe GA und der eingelesenen Referenz-Größe GB darauf schließen, dass dieser mit hoher Wahrscheinlichkeit nicht aus einem Defekt im Antriebsstrang 3 resultiert, sondern aufgrund eines zu erwartenden Getriebe-Effektes im Antriebsstrang 3 auftritt. Infolge dessen wird bei einem Verhalten gemäß Fig. 4 kein Defekt-Zustand ZD des Antriebsstranges 3 ermittelt und ausgegeben.

Wir das Antriebs-Signal SA hinter dem Getriebe 7 gemessen, beispielsweise durch einen Rad-Drehzahlsensor 19 (Antriebs-Drehzahlsensor 17a) an der Antriebs-Achse 1a, der die Antriebs-Nabendrehzahl N9 misst, wird dieser erste Versatz V1 als Normalzustand ZN nicht erfasst, da dieser hinter dem Getriebe 7, das den Sprung verursacht, nicht mehr erfasst werden kann.

In einem dritten Bereich B3 (s. Fig. 2) wird das Fahrzeug 1 durch eine entsprechende Ansteuerung des Antriebs 5 und/oder von Bremsen 6 verzögert, d.h. über die Antriebs-Räder 11 wird ein entsprechendes vom Anrieb 5 in einer Rekuperationsphase erzeugtes negatives Antriebsdrehmoment MA (Schleppmoment) bzw. ein von den Bremsen 6 in einer Bremsphase erzeugtes Bremsmoment MB auf den Untergrund 2 übertragen, woraufhin auch die Referenz-Räder 15 langsamer drehen.

In dieser Fahrsituation ergibt sich der in Fig. 5 dargestellte oszillierende Verlauf 23a, 23b des Antriebs-Signals SA bzw. des Referenz-Signals SB über den Fahrtweg w. Wie auch in Fig. 4 ergibt sich in einem zweiten Zwischenbereich Z2 eine Abweichung D zwischen der eingelesenen Antriebs-Größe GA und der eingelesenen Referenz-Größe GB. Diese Abweichung D wird infolge des Zahnspiels ZN1 im Getriebe 7 (Normal-Zustand ZN, erster Versatz V1) verursacht, das nunmehr aus der Beschleunigungsphase kommend (B2 => Z2 => B3) ebenfalls wieder auftritt. Wurde dieser erste Versatz V1 von der Überwachungseinheit 21 vorher als Normal-Zustand ZN eingelernt (s. auch Figur 4), kann dieser im zweiten Zwischenbereich Z2 wieder identifiziert werden. Aufgrund des ersten Versatzes V1 im zweiten Zwischenbereich Z2 wird also noch nicht auf einen Defekt-Zustand ZD des Antriebsstranges 3 geschlossen.

Ergänzend dazu kann im zweiten Zwischenbereich Z2 aber noch ein zweiter Versatz V2 identifiziert werden, der zusätzlich zum vorher eingelernten ersten Versatz V1 (Normal-Zustand ZN) im Antriebs-Signal SA bzw. im oszillierenden Antriebs-Verlauf 23a auftritt. Dieser zweite Versatz V2 trägt ebenfalls zu der Abweichung D zwischen der eingelesenen Antriebs-Größe GA und der eingelesenen Referenz-Größe GB bei, da auch dieser in Fig. 5 nicht im Referenz-Signal SB bzw. im oszillierenden Referenz-Verlauf 23b auftritt. Daher resultiert auch der zweite Versatz V2 aus dem Drehverhalten im Antriebsstrang 3.

Vorliegend wird darauf geschlossen, dass der zweite Versatz V2 aus einem Defekt im Antriebsstrang 3 resultiert, der beispielsweise durch eine gelöste Radmutter 9b verursacht wird. Folglich wird ein dem zweiten Versatz V2 zugeordneter Defekt-Zustand ZD des Antriebsstranges 3 ermittelt und über ein Defekt-Signal SD ausgegeben. Bei einer losen Radmutter 9b tritt der Fall ein, dass beispielsweise im zweiten Zwischenbereich Z2 ein vom Antrieb 5 erzeugtes Antriebsmoment MA nicht unmittelbar über das Antriebs-Rad 11 auf den Untergrund 2 übertragen wird (vergleichbar zum Zahnspiel ZN1 im Getriebe 7). Dies resultiert daraus, dass sich die Gewindebolzen 9a an der Antriebs-Radnabe 9 wie in Fig. 5A gezeigt in den Löchern 11c in der Felge 11a des Antriebs-Rades 11 bei einem Vorzeichenwechsel im Antriebsmoment MA bzw. bei einem Übergang von einem Bremsmoment MB in ein positives Antriebsmoment MA, d.h. im zweiten Zwischenbereich Z2, verschieben können. Das Antriebs-Rad 11 folgt dem Drehverhalten des Antriebs 5 also erst verzögert.

Dies ist in Fig. 5A schematisch dargestellt. Demnach liegt der Gewindebolzen 9a im zweiten Bereich B2, d.h. bei positivem Antriebsmoment MA, an einer vorderen Flanke 12a des Lochs 11c in der Felge 11a an. Im dritten Bereich B3, d.h. bei negativem Antriebsmoment MA bzw. bei einem Bremsmoment MB, hingegen liegt der Gewindebolzen 9a an einer hinteren Flanke 12b des Lochs 11c an. Folglich findet im zweiten Zwischenbereich Z2 zwischen dem zweiten Bereich B2 und dem dritten Bereich B3 ein Anlagenwechsel statt, bei dem der Gewindebolzen 9a die Flanken 12a, 12b wechselt.

Während diesem Anlagenwechsel dreht sich zwar der Antrieb 5, was über die Antriebs-Größe GA festgestellt werden kann, allerdings wird kurzzeitig und einmalig kein Drehmoment auf das Antriebs-Rad 11 und folglich auch nicht auf den Untergrund 2 übertragen, so dass der zweite Versatz V2 entsteht. Dabei ändert sich das Drehverhalten des Referenz-Rades 15 nicht, so dass sich während des Anlagenwechsels (12a <=> 12b) im zweiten Zwischenbereich Z2 eine Abweichung D zwischen der eingelesenen Antriebs-Größe GA und der eingelesenen Referenz-Größe GB ergibt. Nach Feststellung dieser Abweichung D in Form des normalerweise nicht auftretenden zweiten Versatzes V2 kann also auf einen Defekt-Zustand ZD des Antriebsstranges 3 geschlossen werden, da dieser zweite Versatz V2 nicht dem Normal-Zustand ZN des Antriebsstrangs 3 entspricht.

Dieser Effekt durch den Anlagenwechsel ist in dem zweiten Zwischenbereich Z2 bei einem Übergang vom angetriebenen Zustand (B2) in den bremsenden Zustand (B3) besonders stark zu sehen, da dann der beschriebene Flankenwechsel am signifikantesten auftritt. Grundsätzlich kann dieser Effekt aber auch im ersten Zwischenbereich Z1 (B1 => B2) bzw. in einem dritten Zwischenbereich Z3 (B3 (Rekuperation, Bremsen) => B4 (Leerlauf)) durch Analysieren der Abweichung D zwischen der eingelesenen Antriebs-Größe GA und der eingelesenen Referenz-Größe GB festgestellt werden. Grundsätzlich kann diese Abweichung D aufgrund des Anlagenwechsels immer dann festgestellt werden, wenn das Antriebsmoment MA das Vorzeichen wechselt (B2 <=> B3) oder das Antriebsmoment von Null (Leerlauf/Coasting) ansteigt (Z1: Beschleunigen) oder abfällt (Verzögern) oder sich das Antriebsmoment MA ausgehend von einer Beschleunigungsphase oder einer Bremsphase (B3) auf Null (vgl. Z3) ändert.

Durch einen Vergleich der eingelesenen Antriebs-Größe GA mit der eingelesenen Referenz-Größe GB bzw. durch das Ermitteln einer Abweichung D durch die Überwachungseinheit 21 in einem dritten Schritt ST3 kann also unter Berücksichtigung eines vorab ermittelten bzw. eingelernten Normal-Zustandes ZN auf einen Defekt-Zustand ZD des Antriebsstranges 3 geschlossen werden. In Abhängigkeit davon kann die Überwachungseinheit 21 anschließend ein Defekt-Signal SD ausgeben, das anschließend derartig weiterverarbeitet wird, dass auf den festgestellten Defekt reagiert werden kann. Dazu kann in Abhängigkeit des Defekt-Signals SD eine Anzeigeeinrichtung 25 im Fahrzeug 1 angesteuert werden, um dem Fahrer den Defekt anzuzeigen. Dieser kann dann entsprechend manuell reagieren. Es kann aber auch eine automatisierte Ansteuerung des Fahrzeuges 1 in Abhängigkeit des Defekt-Signals SD erfolgen, so dass das Fahrzeug entsprechend automatisiert beispielsweise abgestellt und/oder zu einer Werkstatt zur Überprüfung des Defektes gesteuert wird.

Die lose Radmutter 9b wurde lediglich beispielhaft als möglicher feststellbarer Defekt-Zustand ZD des Antriebsstranges 3 angegeben. Es können jedoch auch weitere Defekte vorliegen, die im Normal-Zustand ZN des Antriebsstrangs 3 nicht auftreten und die ebenso dazu führen, dass ein im Antriebsstrang 3 erzeugtes Antriebsmoment MA nicht durchgängig auf den Untergrund 2 und darüber auf das Referenz-Rad 15 übertragen wird. All diese Effekte können durch das erfindungsgemäße Ermitteln der Abweichung D zwischen der eingelesenen Antriebs-Größe GA und der eingelesenen Referenz-Größe GB erkannt werden.

### Bezugszeichenliste (Teil der Beschreibung)

- 1: Fahrzeug
- 1a: Antriebs-Achse
- 1b: Referenz-Achse
- 2: Untergrund
- 3: Antriebsstrang des Fahrzeuges 1
- 5: Antrieb
- 5a: Elektromotor
- 5b: Verbrennungsmotor
- 6: Bremsen
- 7: Getriebe
- 9: Antriebs-Radnabe
- 9a: Gewindebolzen
- 9b: Radmutter
- 11: Antriebs-Rad
- 11a: Felge
- 11b: Reifen
- 11c: Löcher in der Felge 11a
- 12a: vordere Flanke
- 12b: hintere Flanke
- 13a: erste Antriebswelle
- 13b: zweite Antriebswelle
- 15: Referenz-Rad
- 16: Referenz-Radnabe
- 17a: Antriebs-Drehzahlsensor
- 17b: Referenz-Drehzahlsensor
- 18: Motor-Drehzahlsensor
- 19: Rad-Drehzahlsensor
- 21: Überwachungseinheit
- 23a: oszillierender Antriebs-Verlauf von 17a; 18
- 23b: oszillierender Referenz-Verlauf von 17b; 19
- 25: Anzeigeeinrichtung
- B1: erster Bereich (Coasting)
- B2: zweiter Bereich (Beschleunigung)
- B3: dritter Bereich (Abbremsen, Rekuperation)
- B4: vierter Bereich (Coasting)
- dTa: Periodenlänge von 23a
- dTb: Periodenlänge von 23b
- D: Abweichung
- fa: Frequenz von 23a
- GA: Antriebs-Größe
- GB: Referenz-Größe
- MA: Antriebsmoment
- MB: Bremsmoment
- N5: Motordrehzahl
- N9: Antriebs-Nabendrehzahl
- N11: Antriebs-Raddrehzahl
- N15: Referenz-Raddrehzahl
- N16: Referenz-Nabendrehzahl
- SA: Antriebs-Signal
- SB: Referenz-Signal
- SD: Defekt-Signal
- V1: erster Versatz
- V2: zweiter Versatz
- w: Fahrtweg
- Z1: erster Zwischenbereich
- Z2: zweiter Zwischenbereich
- Z3: dritter Zwischenbereich
- ZN: Normal-Zustand
- ZN1: Zahnspiel im Getriebe 7
- ZD: Defekt-Zustand

- ST1, ST2, ST3: Schritte des Verfahrens

## Patentansprüche

1. Verfahren zum Ermitteln eines Defekt-Zustandes (ZD) eines Antriebsstrangs (3) eines Fahrzeuges (1), wobei das Fahrzeug (1) eine Antriebs-Achse (1a) mit einem Antriebs-Rad (11) und eine Referenz-Achse (1b) mit einem Referenz-Rad (15) aufweist,
wobei über den Antriebsstrang (3) ein von einem Antrieb (5) erzeugtes Antriebsmoment (MA) über das Antriebs-Rad (11) auf einen Untergrund (2) übertragen werden kann und das Antriebsmoment (MA) des Antriebs (5) nicht über das Referenz-Rad (15) der Referenz-Achse (1b) auf den Untergrund (2) übertragen wird, mit mindestens den folgenden Schritten:
- Einlesen einer Antriebs-Größe (GA) (ST1), wobei die Antriebs-Größe (GA) abhängig von einer Motordrehzahl (N5) des Antriebs (5) ist; **gekennzeichnet durch** ein
- Einlesen einer Referenz-Größe (GB), wobei die Referenz-Größe (GB) abhängig von einer Referenz-Raddrehzahl (N15) des Referenz-Rades (15) ist (ST2);
- Ermitteln, ob zwischen der eingelesenen Antriebs-Größe (GA) und der eingelesenen Referenz-Größe (GB) eine Abweichung (D) vorliegt zum Feststellen, ob die Referenz-Raddrehzahl (N15) des Referenz-Rades (15) mit der Motordrehzahl (N5) des Antriebs (5) zusammenhängt, wobei bei Vorliegen einer Abweichung (D) auf einen Defekt-Zustand (ZD) des Antriebsstranges (3) geschlossen wird (ST3); und
- Ausgeben eines Zustands-Signals (SD) bei Vorliegen eines Defekt-Zustandes (ZD) des Antriebsstranges (3).

2. Verfahren nach Anspruch 1, **dadurch gekennzeichnet, dass** bei Vorliegen einer Abweichung (D) zwischen der eingelesenen Antriebs-Größe (GA) und der eingelesenen Referenz-Größe (GB) auf einen Defekt-Zustand (ZD) des Antriebsstranges (3) unter Berücksichtigung eines Normal-Zustandes (ZN) des Antriebsstrangs (3) geschlossen wird.

3. Verfahren nach Anspruch 2, **dadurch gekennzeichnet, dass** nicht auf einen Defekt-Zustand (ZD) geschlossen wird, wenn eine Abweichung (D) zwischen der eingelesenen Antriebs-Größe (GA) und der eingelesenen Referenz-Größe (GB) lediglich aufgrund eines Normal-Zustandes (ZN) des Antriebsstrangs (3) verursacht wird, wobei der Antriebsstrang (3) in dem Normal-Zustand (ZN) trotz einer festgestellten Abweichung (D) zwischen der eingelesenen Antriebs-Größe (GA) und der eingelesenen Referenz-Größe (GB) keinen Defekt aufweist.

4. Verfahren nach Anspruch 3, **dadurch gekennzeichnet, dass** die in einem Normal-Zustand (ZN) feststellbare Abweichung (D) zwischen der eingelesenen Antriebs-Größe (GA) und der eingelesenen Referenz-Größe (GB) vorab eingelernt wird.

5. Verfahren nach einem der Ansprüche 2 bis 4, **dadurch gekennzeichnet, dass** eine Abweichung (D) zwischen der eingelesenen Antriebs-Größe (GA) und der eingelesenen Referenz-Größe (GB) in dem Normal-Zustand (ZN) aus einem Zahnspiel (ZN1) in einem Getriebe (7) des Antriebsstranges (3) resultiert.

6. Verfahren nach einem der vorhergehenden Ansprüche, **dadurch gekennzeichnet, dass** aus einer Abweichung (D) zwischen der eingelesenen Antriebs-Größe (GA) und der eingelesenen Referenz-Größe (GB) lediglich dann auf einen Defekt-Zustand (ZD) geschlossen wird (ST3), wenn sich diese Abweichung (D) bei und/oder infolge
- einer Veränderung des über das Antriebs-Rad (11) auf den Untergrund (2) übermittelten Antriebsmomentes (MA) und/oder
- einer Veränderung eines über das Antriebs-Rad (11) auf den Untergrund (2) übermittelten Bremsmomentes (MB)
ergibt.

7. Verfahren nach Anspruch 6, **dadurch gekennzeichnet, dass** aus einer Abweichung (D) zwischen der eingelesenen Antriebs-Größe (GA) und der eingelesenen Referenz-Größe (GB) lediglich dann auf einen Defekt-Zustand (ZD) geschlossen wird (ST3), wenn sich diese Abweichung (D)
- bei einer Veränderung des Antriebsmomentes (MA) des Antriebs (5) mit einem Vorzeichenwechsel, oder
- bei einer Veränderung des Antriebsmomentes (MA) des Antriebs (5) und/oder des Bremsmomentes (MB) auf Null oder
- bei einer Veränderung des Antriebsmomentes (MA) des Antriebs (5) und/oder des Bremsmomentes (MB) ausgehend von Null
ergibt.

8. Verfahren nach einem der vorhergehenden Ansprüche, **dadurch gekennzeichnet, dass** die Antriebs-Größe (GA) und die Referenz-Größe (GB) jeweils einen oszillierenden Verlauf (23a, 23b) aufweisen, wobei die Antriebs-Größe (GA) und die Referenz-Größe (GB) durch einen inkrementell messenden Drehzahlsensor (18, 19) aufgenommen werden.

9. Verfahren nach Anspruch 8, **dadurch gekennzeichnet, dass** auf einen Defekt-Zustand (ZD) des Antriebsstrangs (3) geschlossen wird, wenn die Abweichung (D) durch einen zweiten Versatz (V2) in der Antriebs-Größe (GA) verursacht wird, wobei der zweite Versatz (V2) durch eine veränderte Periodenlänge (dTa) des oszillierenden Verlaufes (23a) der Antriebs-Größe (GA) verursacht wird, wobei der zweite Versatz (V2) in dem oszillierenden Verlauf (23b) der Referenz-Größe (GB) nicht nachgewiesen werden kann.

10. Verfahren nach Anspruch 9, **dadurch gekennzeichnet, dass** sich die Periodenlänge (dTa) des oszillierenden Verlaufes (23a) der Antriebs-Größe (GA) kurzzeitig und nicht periodisch verändert, wenn ein Defekt-Zustand (ZD) des Antriebsstranges (3) vorliegt.

11. Verfahren nach einem der vorhergehenden Ansprüche, **dadurch gekennzeichnet, dass** ein Defekt-Zustand (ZD) vorliegt, wenn eine das Antriebs-Rad (11) an einer Antriebs-Radnabe (9) befestigende Radmutter (9a) derartig lose ist, dass sich eine Abweichung (D) zwischen der eingelesenen Antriebs-Größe (GA) und der eingelesenen Referenz-Größe (GB) bei einer Veränderung des über das Antriebs-Rad (11) auf den Untergrund (2) übermittelten Antriebsmomentes (MA) und/oder bei einer Veränderung eines über das Antriebs-Rad (11) auf den Untergrund (2) übermittelten Bremsmomentes (MB) ergibt, da die Referenz-Raddrehzahl (N15) des Referenz-Rades (15) zumindest zeitweise nicht mehr mit der Motordrehzahl (N5) des Antriebs (5) zusammenhängt.

12. Verfahren nach einem der vorhergehenden Ansprüche, **dadurch gekennzeichnet, dass**
- als Antriebs-Größe (GA) die Motordrehzahl (N5) des Antriebs (5) und/oder eine Antriebs-Nabendrehzahl (N9) einer Antriebs-Radnabe (9) in demselben Antriebsstrang (3) eingelesen wird, wobei das Antriebs-Rad (11) an der Antriebs-Radnabe (9) angeordnet ist und die Antriebs-Nabendrehzahl (N9) zumindest während einer Übertragung eines Antriebsmomentes (MA) der Motordrehzahl (N5) des Antriebs (5) entspricht, und/oder
- als Referenz-Größe (GB) eine Referenz-Nabendrehzahl (N16) einer Referenz-Radnabe (16) an der Referenz-Achse (1b) eingelesen wird, wobei das Referenz-Rad (15) an der Referenz-Radnabe (16) angeordnet ist.

13. Überwachungseinheit (21) für ein Fahrzeug (1), insbesondere zur Durchführung eines Verfahrens nach einem der vorhergehenden Ansprüche, wobei das Fahrzeug (1) eine Antriebs-Achse (1a) mit einem Antriebs-Rad (11) und eine Referenz-Achse (1b) mit einem Referenz-Rad (15) aufweist,
wobei über eine Antriebsstrang (3) des Fahrzeuges (1) ein von einem Antrieb (5) erzeugtes Antriebsmoment (MA) über das Antriebs-Rad (11) auf einen Untergrund (2) übertragen werden kann und das Antriebsmoment (MA) des Antriebs (5) nicht über das Referenz-Rad (15) der Referenz-Achse (1b) auf den Untergrund (2) übertragen wird, wobei die Überwachungseinheit (21) ausgebildet ist,
- eine Antriebs-Größe (GA) einzulesen, wobei die Antriebs-Größe (GA) abhängig von einer Motordrehzahl (N5) des Antriebs (5) des Fahrzeuges (1) ist; gekennzeichnet
- eine Referenz-Größe (GB) einzulesen, wobei die Referenz-Größe (GB) abhängig von einer Referenz-Raddrehzahl (N15) des Referenz-Rades (15) des Fahrzeuges (1) ist;
- zu ermitteln, ob zwischen der eingelesenen Antriebs-Größe (GA) und der eingelesenen Referenz-Größe (GB) eine Abweichung (D) vorliegt zum Feststellen, ob die Referenz-Raddrehzahl (N15) des Referenz-Rades (15) mit der Motordrehzahl (N5) des Antriebs (5) zusammenhängt, wobei bei Vorliegen einer Abweichung (D) von der Überwachungseinheit (21) auf einen Defekt-Zustand (ZD) des Antriebsstranges (3) des Fahrzeuges (1) geschlossen werden kann; und
- ein Zustands-Signal (SD) bei Vorliegen eines Defekt-Zustandes (ZD) des Antriebsstranges (3) auszugeben.

14. Fahrzeug (1), insbesondere Nutzfahrzeug, mit einer Überwachungseinheit (21) nach Anspruch 13, wobei das Fahrzeug (1) eine Antriebs-Achse (1a) mit einem Antriebs-Rad (11) und eine Referenz-Achse (1b) mit einem Referenz-Rad (15) aufweist, wobei über einen Antriebsstrang (3) des Fahrzeuges (1) ein von einem Antrieb (5) erzeugtes Antriebsmoment (MA) über das Antriebs-Rad (11) auf einen Untergrund (2) übertragen werden kann und das Antriebsmoment (MA) des Antriebs (5) nicht über das Referenz-Rad (15) der Referenz-Achse (1b) auf den Untergrund (2) übertragen wird,
wobei der Antriebs-Achse (1a) ein Antriebs-Drehzahlsensor (17a) zugeordnet ist zum Ermitteln der Antriebs-Größe (GA) und der Referenz-Achse (1b) ein Referenz-Drehzahlsensor (17b) zugeordnet ist zum Ermitteln der Referenz-Größe (GB).

15. Fahrzeug (1) nach Anspruch 14, **dadurch gekennzeichnet, dass** der Antrieb (5) ein Elektromotor (5a) zum Erzeugen des Antriebsmomentes (MA) ist und der Antriebs-Drehzahlsensor (17a) ein Motor-Drehzahlsensor (18) ist, der als Antriebs-Größe (GA) direkt die Motordrehzahl (N5) erfasst.

## Claims

1. Method for determining a defect state (ZD) of a drive train (3) of a vehicle (1), the vehicle (1) comprising a drive axle (1a) that has a drive wheel (11), and a reference axle (1b) that has a reference wheel (15), a drive torque (MA) generated by a drive (5) being transmittable via the drive wheel (11) to an underlying surface (2) via the drive train (3), and the drive torque (MA) of the drive (5) not being transmitted to the underlying surface (2) via the reference wheel (15) of the reference axle (1b), the method comprising at least the following steps:
- reading in a drive variable (GA) (ST1), the drive variable (GA) being dependent on a motor speed (N5) of the drive (5); **characterized by**
- reading in a reference variable (GB), the reference variable (GB) being dependent on a reference wheel speed (N15) of the reference wheel (15) (ST2);
- determining whether there is a deviation (D) between the read-in drive variable (GA) and the read-in reference variable (GB) in order to detect whether the reference wheel speed (N15) of the reference wheel (15) correlates to the motor speed (N5) of the drive (5), it being concluded, if there is a deviation (D), that there is a defect state (ZD) of the drive train (3) (ST3); and
- outputting a state signal (SD) if there is a defect state (ZD) of the drive train (3).

2. Method according to claim 1, **characterized in that** if there is a deviation (D) between the read-in drive variable (GA) and the read-in reference variable (GB), it is concluded that there is a defect state (ZD) of the drive train (3), taking into account a normal state (ZN) of the drive train (3).

3. Method according to claim 2, **characterized in that** it is not concluded that there is a defect state (ZD) if a deviation (D) between the read-in drive variable (GA) and the read-in reference variable (GB) is caused solely by a normal state (ZN) of the drive train (3), the drive train (3) in the normal state (ZN) not exhibiting any defect despite a detected deviation (D) between the read-in drive variable (GA) and the read-in reference variable (GB).

4. Method according to claim 3, **characterized in that** the deviation (D) that is detectable in a normal state (ZN) between the read-in drive variable (GA) and the read-in reference variable (GB) is taught in in advance.

5. Method according to any of claims 2 to 4, **characterized in that** a deviation (D) between the read-in drive variable (GA) and the read-in reference variable (GB) in the normal state (ZN) results from gear backlash (ZN1) in a gear (7) of the drive train (3).

6. Method according to any of the preceding claims, **characterized in that** a deviation (D) between the read-in drive variable (GA) and the read-in reference variable (GB) is only used to conclude (ST3) that there is a defect state (ZD) if this deviation (D) arises during and/or as a result of:
- a change in the drive torque (MA) transmitted to the underlying surface (2) via the drive wheel (11) and/or
- a change in a braking torque (MB) transmitted to the underlying surface (2) via the drive wheel (11).

7. Method according to claim 6, **characterized in that** a deviation (D) between the read-in drive variable (GA) and the read-in reference variable (GB) is only used to conclude (ST3) that there is a defect state (ZD) if this deviation (D) arises during:
- a change in the drive torque (MA) of the drive (5) that involves a sign change, or
- a change in the drive torque (MA) of the drive (5) and/or the braking torque (MB) to zero, or
- a change in the drive torque (MA) of the drive (5) and/or the braking torque (MB) from zero.

8. Method according to any of the preceding claims, **characterized in that** the drive variable (GA) and the reference variable (GB) each have an oscillating curve (23a, 23b), the drive variable (GA) and the reference variable (GB) being recorded by an incrementally measuring speed sensor (18, 19).

9. Method according to claim 8, **characterized in that** it is concluded that there is a defect state (ZD) of the drive train (3) if the deviation (D) is caused by a second offset (V2) in the drive variable (GA), the second offset (V2) being caused by a changed period length (dTa) of the oscillating curve (23a) of the drive variable (GA), the second offset (V2) in the oscillating curve (23b) of the reference variable (GB) being undetected.

10. Method according to claim 9, **characterized in that** the period length (dTa) of the oscillating curve (23a) of the drive variable (GA) changes briefly and not periodically when there is a defect state (ZD) of the drive train (3).

11. Method according to any of the preceding claims, **characterized in that** there is a defect state (ZD) if a wheel nut (9a) which fastens the drive wheel (11) to a drive wheel hub (9) is so loose that a deviation (D) between the read-in drive variable (GA) and the read-in reference variable (GB) arises when the drive torque (MA) transmitted to the underlying surface (2) via the drive wheel (11) and/or when a braking torque (MB) transmitted to the underlying surface (2) via the drive wheel (11) changes, since the reference wheel speed (N15) of the reference wheel (15) at least temporarily no longer correlates to the motor speed (N5) of the drive (5).

12. Method according to any of the preceding claims, **characterized in that** - the motor speed (N5) of the drive (5) and/or a drive hub speed (N9) of a drive wheel hub (9) in the same drive train (3) is read in as the drive variable (GA), the drive wheel (11) being arranged on the drive wheel hub (9) and the drive hub speed (N9) corresponding to the motor speed (N5) of the drive (5) at least during a transmission of a drive torque (MA), and/or
- a reference hub speed (N16) of a reference wheel hub (16) on the reference axle (1b) is read in as the reference variable (GB), the reference wheel (15) being arranged on the reference wheel hub (16).

13. Monitoring unit (21) for a vehicle (1), in particular for carrying out a method according to any of the preceding claims, the vehicle (1) comprising a drive axle (1a) that has a drive wheel (11), and a reference axle (1b) that has a reference wheel (15),
a drive torque (MA) generated by a drive (5) being transmittable via the drive wheel (11) to an underlying surface (2) via a drive train (3) of the vehicle (1) and the drive torque (MA) of the drive (5) not being transmitted to the underlying surface (2) via the reference wheel (15) of the reference axle (1b), the monitoring unit (21) being designed:
- to read in a drive variable (GA), the drive variable (GA) being dependent on a motor speed (N5) of the drive (5) of the vehicle (1); **characterized**
- to read in a reference variable (GB), the reference variable (GB) being dependent on a reference wheel speed (N15) of the reference wheel (15) of the vehicle (1);
- to determine whether there is a deviation (D) between the read-in drive variable (GA) and the read-in reference variable (GB) in order to detect whether the reference wheel speed (N15) of the reference wheel (15) correlates to the motor speed (N5) of the drive (5), the monitoring unit (21) being able to conclude that there is a defect state (ZD) of the drive train (3) of the vehicle (1) if there is a deviation (D); and
- to output a state signal (SD) if there is a defect state (ZD) of the drive train (3).

14. Vehicle (1), in particular a commercial vehicle, comprising a monitoring unit (21) according to claim 13, the vehicle (1) comprising a drive axle (1a) that has a drive wheel (11), and a reference axle (1b) that has a reference wheel (15), a drive torque (MA) generated by a drive (5) being transmittable via a drive train (3) of the vehicle (1) to an underlying surface (2) via the drive wheel (11), and the drive torque (MA) of the drive (5) not being transmitted to the underlying surface (2) via the reference wheel (15) of the reference axle (1b), the drive axle (1a) being assigned to a drive speed sensor (17a) to determine the drive variable (GA), and the reference axle (1b) being assigned to a reference speed sensor (17b) to determine the reference variable (GB).

15. Vehicle (1) according to claim 14, **characterized in that** the drive (5) is an electric motor (5a) for generating the drive torque (MA), and the drive speed sensor (17a) is a motor speed sensor (18) which directly captures the motor speed (N5) as the drive variable (GA).

## Revendications

1. Procédé permettant de déterminer un état défectueux (ZD) d'une chaîne cinématique (3) d'un véhicule (1), dans lequel le véhicule (1) présente un essieu moteur (1a) comportant une roue motrice (11) et un essieu de référence (1b) comportant une roue de référence (15), dans lequel un couple d'entraînement (MA) généré par un entraînement (5) peut être transmis par l'intermédiaire de la roue motrice (11) à un sol (2) par l'intermédiaire de la chaîne cinématique (3) et le couple d'entraînement (MA) de l'entraînement (5) n'est pas transmis au sol (2) par l'intermédiaire de la roue de référence (15) de l'essieu de référence (1b), comportant au moins les étapes suivantes :
- lecture d'une quantité d'entraînement (GA) (ST1), dans lequel la quantité d'entraînement (GA) dépend d'une vitesse de rotation de moteur (N5) de l'entraînement (5) ; **caractérisé par** une
- lecture d'une quantité de référence (GB), dans lequel la quantité de référence (GB) dépend d'une vitesse de rotation de roue de référence (N15) de la roue de référence (15) (ST2) ;
- fait de déterminer si un écart (D) est présent entre la quantité d'entraînement (GA) lue et la quantité de référence (GB) lue pour permettre de constater si la vitesse de rotation de roue de référence (N15) de la roue de référence (15) est liée à la vitesse de rotation de moteur (N5) de l'entraînement (5), dans lequel, en présence d'un écart (D), on conclut (ST3) à un état défectueux (ZD) de la chaîne cinématique (3) ; et
- émission d'un signal d'état (SD) en présence d'un état défectueux (ZD) de la chaîne cinématique (3).

2. Procédé selon la revendication 1, **caractérisé en ce que,** en présence d'un écart (D) entre la quantité d'entraînement (GA) lue et la quantité de référence (GB) lue, on conclut à un état défectueux (ZD) de la chaîne cinématique (3) en tenant compte d'un état normal (ZN) de la chaîne cinématique (3).

3. Procédé selon la revendication 2, **caractérisé en ce qu'** on ne conclut pas à un état défectueux (ZD) lorsqu'un écart (D) entre la quantité d'entraînement (GA) lue et la quantité de référence (GB) lue est provoqué uniquement en raison d'un état normal (ZN) de la chaîne cinématique (3), dans lequel la chaîne cinématique (3) ne présente aucun défaut dans l'état normal (ZN) malgré un écart (D) constaté entre la quantité d'entraînement (GA) lue et la quantité de référence (GB) lue.

4. Procédé selon la revendication 3, **caractérisé en ce que** l'écart (D) constatable dans un état normal (ZN) entre la quantité d'entraînement (GA) lue et la quantité de référence (GB) lue est appris au préalable.

5. Procédé selon l'une des revendications 2 à 4, **caractérisé en ce qu'** un écart (D) entre la quantité d'entraînement (GA) lue et la quantité de référence (GB) lue dans l'état normal (ZN) résulte d'un jeu de dents (ZN1) dans une transmission (7) de la chaîne cinématique (3).

6. Procédé selon l'une des revendications précédentes,
**caractérisé en ce que,** à partir d'un écart (D) entre la quantité d'entraînement (GA) lue et la quantité de référence (GB) lue, on conclut (ST3) à un état défectueux (ZD) uniquement si ledit écart (D) se produit lors et/ou à la suite
- d'une modification du couple d'entraînement (MA) transmis au sol (2) par l'intermédiaire de la roue motrice (11) et/ou
- d'une modification d'un couple de freinage (MB) transmis au sol (2) par l'intermédiaire de la roue motrice (11).

7. Procédé selon la revendication 6, **caractérisé en ce que,** à partir d'un écart (D) entre la quantité d'entraînement (GA) lue et la quantité de référence (GB) lue on conclut (ST3) à un état défectueux (ZD) uniquement lorsque ledit écart (D) se produit
- lors d'une modification du couple d'entraînement (MA) de l'entraînement (5) comportant un changement de signe, ou
- lors d'une modification du couple d'entraînement (MA) de l'entraînement (5) et/ou du couple de freinage (MB) à zéro ou
- lors d'une modification du couple d'entraînement (MA) de l'entraînement (5) et/ou du couple de freinage (MB) à partir de zéro.

8. Procédé selon l'une des revendications précédentes,
**caractérisé en ce que** la quantité d'entraînement (GA) et la quantité de référence (GB) présentent respectivement une allure oscillante (23a, 23b), dans lequel la quantité d'entraînement (GA) et la quantité de référence (GB) sont reçues par un capteur de vitesse de rotation (18, 19) à mesure incrémentielle.

9. Procédé selon la revendication 8, **caractérisé en ce que** l'on conclut à un état défectueux (ZD) de la chaîne cinématique (3) lorsque l'écart (D) est provoqué par un second décalage (V2) dans la quantité d'entraînement (GA), dans lequel le second décalage (V2) est provoqué par une longueur de période (dTa) modifiée de l'allure oscillante (23a) de la quantité d'entraînement (GA), dans lequel le second décalage (V2) ne peut pas être détecté dans l'allure oscillante (23b) de la quantité de référence (GB).

10. Procédé selon la revendication 9, **caractérisé en ce que** la longueur de période (dTa) de l'allure oscillante (23a) de la quantité d'entraînement (GA) est modifiée brièvement et non périodiquement lorsqu'un état défectueux (ZD) de la chaîne cinématique (3) est présent.

11. Procédé selon l'une des revendications précédentes,
**caractérisé en ce qu'** un état défectueux (ZD) est présent lorsqu'un écrou de roue (9a) fixant la roue motrice (11) sur un moyeu de roue motrice (9) est desserré, de telle sorte qu'un écart (D) se produit entre la quantité d'entraînement (GA) lue et la quantité de référence (GB) lue lors d'une modification du couple d'entraînement (MA) transmis au sol (2) par l'intermédiaire de la roue motrice (11) et/ou lors d'une modification d'un couple de freinage (MB) transmis au sol (2) par l'intermédiaire de la roue motrice (11), car la vitesse de rotation de roue de référence (N15) de la roue de référence (15) n'est plus liée, au moins temporairement, à la vitesse de rotation de moteur (N5) de l'entraînement (5).

12. Procédé selon l'une des revendications précédentes,
**caractérisé en ce que** - la vitesse de rotation de moteur (N5) de l'entraînement (5) et/ou une vitesse de rotation de moyeu d'entraînement (N9) d'un moyeu de roue motrice (9) dans la même chaîne cinématique (3) est lue en tant que quantité d'entraînement (GA), dans lequel la roue motrice (11) est disposée sur le moyeu de roue motrice (9) et la vitesse de rotation de moyeu d'entraînement (N9) correspond à la vitesse de rotation de moteur (N5) de l'entraînement (5) au moins pendant une transmission d'un couple d'entraînement (MA), et/ou
- une vitesse de rotation de moyeu de référence (N16) d'un moyeu de roue de référence (16) sur l'essieu de référence (1b) est lue en tant que quantité de référence (GB), dans lequel la roue de référence (15) est disposée sur le moyeu de roue de référence (16).

13. Unité de surveillance (21) pour un véhicule (1), en particulier pour la mise en oeuvre d'un procédé selon l'une des revendications précédentes, dans laquelle le véhicule (1) présente un essieu moteur (1a) comportant une roue motrice (11) et un essieu de référence (1b) comportant une roue de référence (15),
dans laquelle, par l'intermédiaire d'une chaîne cinématique (3) du véhicule (1), un couple d'entraînement (MA) généré par un entraînement (5) peut être transmis à un sol (2) par l'intermédiaire de la roue motrice (11) et le couple d'entraînement (MA) de l'entraînement (5) n'est pas transmis au sol (2) par l'intermédiaire de la roue de référence (15) de l'essieu de référence (1b), dans laquelle l'unité de surveillance (21) est configurée
- pour lire une quantité d'entraînement (GA), dans laquelle la quantité d'entraînement (GA) dépend d'une vitesse de rotation de moteur (N5) de l'entraînement (5) du véhicule (1) ; **caractérisée**
- pour lire une quantité de référence (GB), dans laquelle la quantité de référence (GB) dépend d'une vitesse de rotation de roue de référence (N15) de la roue de référence (15) du véhicule (1) ;
- pour déterminer si un écart (D) est présent entre la quantité d'entraînement (GA) lue et la quantité de référence (GB) lue pour permettre de constater si la vitesse de rotation de roue de référence (N15) de la roue de référence (15) est liée à la vitesse de rotation de moteur (N5) de l'entraînement (5), dans laquelle, en présence d'un écart (D), l'unité de surveillance (21) peut conclure à un état défectueux (ZD) de la chaîne cinématique (3) du véhicule (1) ; et
- pour émettre un signal d'état (SD) en présence d'un état défectueux (ZD) de la chaîne cinématique (3).

14. Véhicule (1), en particulier véhicule utilitaire, comportant une unité de surveillance (21) selon la revendication 13, dans lequel le véhicule (1) présente un essieu moteur (1a) comportant une roue motrice (11) et un essieu de référence (1b) comportant une roue de référence (15), dans lequel un couple d'entraînement (MA) généré par un entraînement (5) peut être transmis par l'intermédiaire de la roue motrice (11) à un sol (2) par l'intermédiaire d'une chaîne cinématique (3) du véhicule (1) et le couple d'entraînement (MA) de l'entraînement (5) n'est pas transmis au sol (2) par l'intermédiaire de la roue de référence (15) de l'essieu de référence (1b), dans lequel un capteur de vitesse de rotation d'entraînement (17a) est associé à l'essieu moteur (1a) pour permettre de déterminer la quantité d'entraînement (GA) et un capteur de vitesse de rotation de référence (17b) est associé à l'essieu de référence (1b) pour permettre de déterminer la quantité de référence (GB).

15. Véhicule (1) selon la revendication 14, **caractérisé en ce que** l'entraînement (5) est un moteur électrique (5a) permettant de générer le couple d'entraînement (MA) et le capteur de vitesse de rotation d'entraînement (17a) est un capteur de vitesse de rotation de moteur (18) qui détecte directement la vitesse de rotation de moteur (N5) comme quantité d'entraînement (GA).
